(19) Europäisches Patentamt / European Patent Office / Office européen des brevets

(11) **EP 2 820 706 B1**

(12) **EUROPÄISCHE PATENTSCHRIFT**

(45) Veröffentlichungstag und Bekanntmachung des Hinweises auf die Patenterteilung:
26.10.2016 Patentblatt 2016/43

(21) Anmeldenummer: **13709344.9**

(22) Anmeldetag: **28.02.2013**

(51) Int Cl.:
*H01M 4/133* (2010.01)     *H01M 4/583* (2010.01)
*H01M 10/05* (2010.01)     *H01M 10/0566* (2010.01)

(86) Internationale Anmeldenummer:
**PCT/EP2013/054092**

(87) Internationale Veröffentlichungsnummer:
**WO 2013/127953 (06.09.2013 Gazette 2013/36)**

(54) **ELEKTROCHEMISCHE ENERGIESPEICHER- ODER ENERGIEWANDLERVORRICHTUNG AUS EINER GALVANISCHEN ZELLE MIT ELEKTROCHEMISCHEN HALBZELLEN UMFASSEND EINE SUSPENSION AUS FULLEREN UND IONISCHER FLÜSSIGKEIT**

ELECTROCHEMICAL ENERGY STORAGE OR ENERGY CONVERSION DEVICE COMPRISING A GALVANIC CELL HAVING ELECTROCHEMICAL HALF-CELLS CONTAINING A SUSPENSION OF FULLERENE AND IONIC LIQUID

DISPOSITIF DE STOCKAGE OU DE CONVERSION D'ÉNERGIE ÉLECTROCHIMIQUE CONSTITUÉ D'UNE CELLULE GALVANIQUE AVEC DES DEMI-CELLULES ÉLECTROCHIMIQUES COMPRENANT UNE SUSPENSION DE FULLERÈNE ET DE LIQUIDE IONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.03.2012 DE 102012203194**

(43) Veröffentlichungstag der Anmeldung:
**07.01.2015 Patentblatt 2015/02**

(73) Patentinhaber: **Fraunhofer Gesellschaft zur Förderung der angewandten Forschung e.V.
80686 München (DE)**

(72) Erfinder:
• **NOACK, Jens
751 72 Pforzheim (DE)**
• **TUEBKE, Jens
76337 Waldbronn (DE)**
• **PINKWART, Karsten
76327 Pfinztal (DE)**

(74) Vertreter: **Zumstein, Angela
Maiwald Patentanwalts GmbH
Elisenhof
Elisenstrasse 3
80335 München (DE)**

(56) Entgegenhaltungen:
EP-A1- 1 548 862     WO-A1-00/31811
WO-A2-2010/068651     WO-A2-2010/091352
GB-A- 2 413 319     JP-A- H05 101 850
JP-A- H05 314 977     JP-A- H07 296 799
US-A1- 2004 091 783     US-A1- 2005 158 626
US-A1- 2005 221 184

**Beschreibung**

Die vorliegende Erfindung betrifft eine elektrochemische Halbzelle umfassend ein aktives Anoden- oder Kathodenmaterial mit mindestens einem Fulleren als elektrochemisch aktive Verbindung, wobei das Fulleren in Form einer Suspension mit einer ionischen Flüssigkeit vorliegt und das aktive Anoden- oder Kathodenmaterial frei von Metallen, Metallionen und/oder Metallverbindungen ist.

Weiterhin betrifft die Erfindung eine elektrochemische Energiespeicher- und/oder Energiewandlervorrichtung mit mindestens zwei der erfindungsgemäßen elektrochemischen Halbzellen und ein Verfahren zur Herstellung einer erfindungsgemäßen elektrochemischen Halbzelle, umfassend das Bereitstellen einer Suspension mit mindestens einem Fulleren und mindestens einer ionischen Flüssigkeit.

Hintergrund der Erfindung

Energiespeicher- und/oder Energiewandlervorrichtungen umfassen galvanische Zellen, bei denen durch Redoxreaktionen an Elektroden chemische Energie in elektrische Energie umgewandelt wird. Eine galvanische Zelle dient als Gleichspannungsquelle und umfasst mindestens zwei elektrochemische Halbzellen in denen Oxidation und Reduktion getrennt ablaufen. Die galvanischen Zellen werden systematisch in drei Gruppen unterteilt:

(a) Primärzellen, welche auch als Batterie bezeichnet werden, dadurch gekennzeichnet, dass nach dem Verbinden der Halbzellen mit mindestens einem Elektronenleiter und mindestens einem Ionenleiter die Zelle aufgeladen ist und einmalig entladen werden kann. Die der Entladung zugrundeliegende Redoxreaktion ist irreversibel, so dass die Primärzelle elektrisch nicht mehr aufgeladen werden kann.

(b) Sekundärzellen, welche auch als Akkumulator bezeichnet werden, dadurch gekennzeichnet, dass die mit mindestens einem Elektronenleiter und mindestens einem Ionenleiter verbundenen Halbzellen eine galvanische Zelle bilden, die wiederholt aufgeladen und entladen werden kann. Die der Entladung zugrundeliegende Redoxreaktion ist dabei reversibel, so dass die Sekundärzellen elektrisch aufgeladen werden kann. Die Lebensdauer der Sekundärzelle wird dabei durch eine bestimmte Anzahl an Lade- und Entladevorgängen beschränkt.

(c) Brennstoffzellen, welche auch als Tertiärzellen bezeichnet werden, dadurch gekennzeichnet, dass der chemische Energieträger nicht in der Zelle gespeichert wird, sondern von extern kontinuierlich zugeführt wird. Eine Brennstoffzelle nutzt somit die chemische Energie eines kontinuierlich zugeführten Brennstoffes und eines kontinuierlich zugeführten Oxidationsmittels und wandelt diese in elektrische Energie.

Kommerzielle Sekundärzellen sind beispielsweise Blei-Säure-Akkumulatoren, Nickel-Cadmium Akkumulatoren, Nickel-Metallhydrid Akkumulatoren, Nickel-Zink Akkumulatoren, Nickel-Eisen Akkumulatoren, Lithium-Ionen Akkumulatoren, Lithium-Polymer Akkumulatoren, Lithium-Eisen Akkumulatoren, Lithium-Mangan Akkumulatoren, Lithium-Eisen-Phosphat Akkumulatoren, Lithium-Schwefel Akkumulatoren sowie Lithium-Titanat Akkumulatoren.

Blei-Säure-Akkumulatoren umfassen wässrige Schwefelsäure als Elektrolyt und weisen bei einer Nennspannung von 2,0 V eine gravimetrische Energiedichte von 30 Wh/kg auf. Die auf Nickel basierenden Akkumulatoren umfassen wässrige Alkalihydroxide als Elektrolyt und weisen bei einer Nennspannung in einem Bereich von 1,2 bis 1,9 V eine gravimetrische Energiedichte in einem Bereich von 40 bis 110 Wh/kg. Die auf Lithium basierenden Akkumulatoren umfassen wasserfreie organische Lösemittel mit Lithiumsalzen, sowie Salzschmelzen als Elektrolyt und weisen bei einer Nennspannung in einem Bereich von 2,2 bis 3,7 V eine gravimetrische Energiedichte in einem Bereich von 70 bis 210 Wh/kg auf. Die auf Lithium basierenden Akkumulatoren, insbesondere Lithium-Polymer Akkumulatoren weisen eine hohe Energiedichte auf, allerdings zeigen sie meist ausgeprägte Alterungserscheinungen und beinhalten leicht entzündliche aktive Anoden- und/oder Kathodenmaterialien, was ein großes Gefahrenpotential, insbesondere bei einer Anwendung im privaten Sektor darstellt.

Generell werden hohe Nennspannungen sowie hohe Kapazitäten bei einer hohen gravimetrischen und volumetrischen Energiedichte angestrebt. Dies ist bei mobilen Anwendungen, wie beispielsweise dem Mobilfunksektor, von besonderer Bedeutung.

Die gravimetrische Energiedichte ($E_{grav}$) und die volumetrische Energiedichte ($E_{vol}$) einer galvanischen Zelle ergeben sich gemäß den Formeln (i) und (ii):

$$E_{grav}\,[Wh/kg] = \; U[V] \cdot I[A] \cdot t[h] \,/\, m[kg] \quad (i),$$

$$E_{vol}\,[\text{Wh/cm}^3] = U[V] \cdot I[A] \cdot t[h] / V[\text{cm}^3]\ \ (ii),$$

wobei U die Spannung in Volt [V], I der Strom in Amper [A], t die Zeit in Stunden [h], m die Masse in Kilogramm [kg] und V das Volumen in Kubikzentimeter [cm$^3$] ist.

Hohe gravimetrische und volumetrische Energiedichten werden demzufolge erzielt wenn galvanische Zellen aus Stoffen mit einer hohen Leistung und einer geringen molaren Masse und/oder einem geringen molaren Volumen aufgebaut werden. Es besteht demzufolge ein Bedarf an neuartigen Stoffen die zum Aufbau galvanischer Zellen mit einer hohen Leistung, welche eine hohe gravimetrische und/oder volumetrische Energiedichte aufweisen.

In diesem Zusammenhang ist die Wahl der in der galvanischen Zelle eingesetzten Elektrolyten und der in der galvanischen Zelle eingesetzten Lösungsmitteln von besonderer Bedeutung, da die üblicherweise eingesetzten wässrigen Elektrolyten und Lösungsmittel bei hohen Spannungen nicht stabil sind. Es besteht demzufolge Bedarf an nichtwässrigen Elektrolytverbindungen und Lösungsmitteln, welche bei hohen Spannungen stabil sind.

In den vorgenannten, aus dem Stand der Technik bereits bekannten und kommerziell erhältlichen Sekundärzellen werden seltene und damit teure metallhaltige Verbindungen als aktive Anoden- und/oder Kathodenmaterialien eingesetzt. Dies führt dazu, dass die Herstellung der daraus aufgebauten Sekundärzellen sehr kostenintensiv ist. Aufgrund der stetig steigenden Nachfrage und des damit verbundenen marktwirtschaftlichen Preisdrucks unter den Marktteilnehmern besteht deshalb ein ganz erheblicher Bedarf an neuartigen aktiven Anoden- und/oder Kathodenmaterialien, insbesondere aktiven Anoden- und/oder Kathodenmaterialien, welche nicht auf Metallen, Metallionen und/oder Metallverbindungen basieren, insbesondere nicht auf Metallen, Metallionen und/oder Metallverbindungen aus Blei, Nickel, Cadmium, Lithium, Mangan, Titan oder Zink.

Unter "aktive Anoden- und/oder Kathodenmaterialien" sind elektrochemisch aktive Verbindungen zu verstehen, welche durch chemische Umwandlungen, insbesondere Reduktions- oder Oxidationsvorgänge an einer Elektrode Elektronen aufnehmen oder abgeben.

Kurzdarstellung der Erfindung

Die der Erfindung zugrundeliegende Aufgabe ist das Bereitstellen einer elektrochemischen Halbzelle sowie einer Energiespeicher- und/oder Energiewandlervorrichtung, mit mindestens zwei der erfindungsgemäßen elektrochemischen Halbzellen, umfassend aktive Anoden- und Kathodenmaterialien ohne Metalle, Metallionen und/oder Metallverbindungen. Von besonderem Interesse sind dabei Energiespeicher- und/oder Energiewandlervorrichtung mit verbesserter gravimetrischer und/oder volumetrischer Energiedichte.

Eine weitere der Erfindung zugrundeliegende Aufgabe ist das Bereitstellen eines geeigneten Elektrolyts für die Herstellung einer erfindungsgemäßen elektrochemischen Halbzelle sowie einer erfindungsgemäßen Energiespeicher- und/oder Energiewandlervorrichtung, mit einem niedrigen Dampfdruck, hoher thermischer und chemischer Stabilität, sowie hoher elektrischer Leitfähigkeit und einem breiten elektrochemischen Fenster, das außerdem einen, im Vergleich zu den üblichen in kommerziellen Energiespeicher- und/oder Energiewandlervorrichtung eingesetzten wasserfreien organischen Lösemitteln, hohen Flammpunkt aufweist.

Unter "Energiespeicher- und/oder Energiewandlervorrichtung" ist eine Vorrichtung aus Anoden und Kathoden zur spontanen Umwandlung von chemischer in elektrische Energie zu verstehen. Die Anode und die Katode sind dabei sowohl elektrolytisch, als auch metallisch leitend verbunden. Bei den stromerzeugenden Reaktionen handelt es sich um Redoxreaktionen, deren elektromotorischen Kräfte durch die Normalpotentiale der beteiligten chemischen Elemente vorgegeben sind. Die elektromotorische Kraft ist dabei als die Potenzialdifferenz zwischen den Klemmen einer elektrischen Stromquelle zu verstehen, wobei diese keinen Strom liefert. Das Normalpotential einer Elektrode ist der Gleichgewichtswert des Elektrodenpotenzials, wenn die an der Elektrodenreaktion beteiligten Komponenten des Elektrolyten sich im Normzustand befinden und die festen Komponenten in einer reinen Form vorliegen, wobei der Normzustand durch eine Normtemperatur bei 273,1 K und einem Normdruck bei 1,01325 bar festgelegt ist. Für gelöste Elektrolyte ist die spezifische, dem Normzustand entsprechende Konzentration die Normalität. Das Normalpotential entspricht dem Potenzial einer Normal-Metallelektrode, d.h. einer Metallelektrode, die in die Lösung eines ihrer Salze der Aktivität 1 eintaucht, gegen die Normalwasserstoffelektrode bei 25°C; cf. Römpp Chemie Lexikon, 9. Auflage, Seiten 1123, 1476 bis 1477 und 3048 bis 3051. Die im Rahmen dieser Erfindung als elektrochemische Energiespeicher- und/oder Energiewandlervorrichtung mit mindestens zwei elektrochemischen Halbzellen bezeichnete Vorrichtung entspricht im Wesentlichen einer galvanischen Zelle.

Unter "elektrochemischer Halbzelle" ist eine Anordnungen zu verstehen bei der ein aktives Anoden- und/oder Kathodenmaterial sowie Elektrode in einen Elektrolyt eintaucht, wobei der Elektrolyt mit dem Elektrolyt mindestens einer weiteren "elektrochemische Halbzelle" in Kontakt steht, insbesondere über ein poröses Diaphragma (mikroporöser Separator).

Diese Aufgaben werden mit den Merkmalen der unabhängigen Ansprüche gelöst, vorteilhafte Ausgestaltungen der Erfindung sind in den Unteransprüchen angegeben.

Die Erfindung betrifft elektrochemische Halbzellen umfassend ein aktives Anoden- oder Kathodenmaterial mit mindestens einem Fulleren als elektrochemisch aktive Verbindung, wobei das Fulleren in Form einer Suspension mit einer ionischen Flüssigkeit vorliegt und das aktive Anoden- oder Kathodenmaterial frei von Metallen, Metallionen und/oder Metallverbindungen ist.

Weiterhin betrifft die Erfindung eine elektrochemische Energiespeicher- und/oder Energiewandlervorrichtung mit mindestens zwei der erfindungsgemäßen elektrochemischen Halbzellen und ein Verfahren zur Herstellung einer erfindungsgemäßen elektrochemischen Halbzelle, insbesondere ein Verfahren zur Herstellung einer elektrochemischen Halbzelle umfassend das Bereitstellen einer Suspension in einer ionischen Flüssigkeit mit mindestens einem Fulleren als elektrochemisch aktive Verbindung eines aktiven Anoden- oder Kathodenmaterials, wobei das aktive Anoden- oder Kathodenmaterial frei von Metallen, Metallionen und/oder Metallverbindungen ist.

Detaillierte Beschreibung der Erfindung

Die Erfindung betrifft eine elektrochemische Halbzelle, umfassend ein aktives Anodenoder Kathodenmaterial mit mindestens einem Fulleren alls elektrochemisch aktive Verbindung, wobei das Fulleren in Form einer Suspension mit einer ionischen Flüssigkeit vorliegt und das aktive Anoden- oder Kathodenmaterial frei von Metallen, Metallionen und/ oder Metallverbindungen ist.

Unter "Fulleren" sind im Rahmen dieser Erfindung sphärische, ausschließlich aus Kohlenstoff bestehende Makromoleküle aus $C_{2n}$ Kohlenstoffatomen mit pentagonalen und hexagonalen Struktureinheiten hoher Symmetrie zu verstehen, welche eine weitere Modifikation des chemischen Elements Kohlenstoff, neben Diamant, Graphit, Kohlenstoffnanoröhren und Graphen darstellt.

Unter "ionische Flüssigkeit" sind im Rahmen dieser Erfindung Flüssigkeiten zu verstehen, welche ausschließlich aus Ionen bestehen. Zur Abgrenzung zu klassischen Salzschmelzen werden nur solche Salze als ionische Flüssigkeiten bezeichnet, die einen Schmelzpunkt von unter 100 °C aufweisen; cf. P. Wasserscheid, W. Keim, Angewandte Chemie, International Edition 2000, 39, 3772. Ionische Flüssigkeiten werden meist durch die Art ihres Kations klassifiziert, wobei typische Vertreter auf Imidazolium-, Pyridinium-, Ammonium- und/oder Phosphoniumsalzen basieren. In der Regel weisen ionische Flüssigkeiten einen geringen Dampfdruck, eine hohe thermische und chemische Stabilität, sowie eine hohe elektrische Leitfähigkeit und eine breites elektrochemische Fenster auf. Zudem zeichnen sich die ionischen Flüssigkeiten durch einen, im Vergleich zu den üblichen organischen Lösungsmitteln, hohen Flammpunkt aus.

Das Fulleren ist vorzugsweise ausgewählt aus einer Gruppe bestehend aus [5,6]-Fulleren-$C_{60}$ (IUPAC: $C_{60}$-$I_h$)[5,6]fulleren), [5,6]-Fulleren-$C_{70}$(IUPAC: ($C_{70}$-$D_{5h(6)}$)[5,6]fulleren), Fulleren-$C_{76}$, Fulleren-$C_{78}$, Fulleren-$C_{80}$, Fulleren-$C_{82}$, Fulleren-$C_{84}$, Fulleren-$C_{86}$, Fulleren-$C_{90}$ oder Mischungen daraus, besonders bevorzugt [5,6]-Fulleren-$C_{60}$ und/oder [5,6]-Fulleren-$C_{70}$, insbesondere [5,6]-Fulleren-$C_{60}$.

Die ionische Flüssigkeit ist vorzugsweise ausgewählt aus der Gruppe bestehend aus 1-Butyl-3-methyl-imidazolium-chlorid, 1-Butyl-3-methyl-imidazolium-hexafluorphosphat, 1-Butyl-3-methyl-imidazolium-tetrafluorborat, 1-Butyl-3-methyl-imidazolium-trifluormethansulfonat, 1-Butyl-1-methyl-pyrrolidinium-bis(trifluormethylsulfonyl)imid, Butyl-trimethylammonium-bis(trifluormethylsulfonyl)imid, Cholin-dihydrogenphosphat, Ethylammoniumnitrat, 1-Ethyl-3-methyl-imidazolium-bromid, 1-Ethyl-3-methyl-imidazolium-dicyanamid, 1-Ethyl-3-methyl-imidazolium-ethylsulfat, 1-Ethyl-3-methyl-imidazolium-methansulfonat, 1-Hexyl-3-methyl-imidazoliumchlorid, 1-Hexyl-3-methyl-imidazolium-hexafluorphosphat, 1-Hexyl-3-methyl-imidazolium-tetrafluorborat, 1-Methyl-3-octyl-imidazolium-hexafluorphosphat, 1-Methyl-3-octyl-imidazolium-tetrafluorborat, 1-Methyl-3-propyl-imidazolium-iodid, 1-Methyl-1-propyl-piperidinium-bis-(trifluormethylsulfonyl)-imid, Triethylsulphonium-bis(trifluormethylsulfonyl)imid oder Mischungen daraus, insbesondere 1-Methyl-1-propylpyrrolidiniumbis(trisfluoromethylsulfonyl)imid.

In einer vorteilhaften Ausgestaltung der Erfindung umfasst die elektrochemische Halbzelle mindestens ein aktives Anoden- und/oder Kathodenmaterial, mindestens ein Elektrolyt und mindestens eine Elektrode.

*Aktives Anoden- und/oder Kathodenmaterial*

Das aktive Anodenmaterial umfasst eine elektrochemisch aktive Verbindung, welche mindestens 1 Elektron aufnehmen und/oder abgeben kann, bevorzugt mindestens 2 Elektronen, weiter bevorzugt mindestens 3 Elektronen, weiter bevorzugt mindestens 4 Elektronen, weiter bevorzugt mindestens 5 Elektronen, weiter bevorzugt mindestens 6 Elektronen weiter bevorzugt bis zu 2 Elektronen, weiter bevorzugt bis zu 3 Elektronen, weiter bevorzugt bis zu 4 Elektronen, weiter bevorzugt bis zu 5 Elektronen, weiter bevorzugt bis zu 6 Elektronen. Das aktive Kathodenmaterial umfasst dabei eine elektrochemisch aktive Verbindung welche mindestens 1 Elektron aufnehmen und/oder abgeben kann, bevorzugt mindestens 2 Elektronen, weiter bevorzugt mindestens 3 Elektronen, weiter bevorzugt mindestens 4 Elektronen, weiter bevorzugt mindestens 5 Elektronen, weiter bevorzugt mindestens 6 Elektronen, weiter bevorzugt bis zu 2 Elektronen, weiter bevorzugt bis zu 3 Elektronen, weiter bevorzugt bis zu 4 Elektronen, weiter bevorzugt bis zu 5 Elektronen, weiter bevorzugt bis zu 6 Elektronen. Die Aufnahme oder Abgabe von Elektronen durch das aktive Anoden- und/oder Kathodenmaterial erfolgt durch Reduktions- oder Oxidationsvorgänge.

Erfindungsgemäß umfasst das aktive Anoden- oder Kathodenmaterial mindestens ein Fulleren. In einer Ausführungsform ist das Fulleren der einzige Bestandteil des aktiven Anoden- oder Kathodenmaterials.

Fulleren kann als mehrfach geladenes Kation beziehungsweise als mehrfach geladenes Anion auftreten, insbesondere kann das Fulleren in oxidierter Form in den Oxidationsstufen +1 bis +6 vorliegen und in reduzierter Form in den Oxidationsstufen -1 bis -6. In anderen Worten kann Fulleren in seinem elektronischen Grundzustand bis zu 6 Elektronen aufnehmen beziehungsweise bis zu 6 Elektronen abgeben. Das Fulleren kann in fester und/oder gelöster Form vorliegen, insbesondere in Form von Partikeln.

In einer besonderen Ausführungsform der erfindungsgemäßen elektrochemischen Halbzelle, umfasst das aktive Anoden- oder Kathodenmaterial neben mindestens einem Fulleren keine weiteren aktiven Anoden- oder Kathodenmaterialien. In anderen Worten ist in dieser Ausführungsform das Fulleren das einzige aktive Anoden oder Kathodenmaterial.

Die erfindungsgemäße elektrochemische Halbzelle umfasst ein aktives Anoden- oder Kathodenmaterial, das frei von Metallen, Metallionen und/oder Metallverbindungen ist.

Erfindungsgemäß umfasst das aktive Anoden- oder Kathodenmaterial mindestens ein Fulleren, das in Form einer Suspension vorliegt. Die Suspension kann dabei 0.1 bis 99.9 Gew.-%, bevorzugt 1 bis 50 Gew.-%, weiter bevorzugt 1 bis 25 Gew.-%, weiter bevorzugt 5 bis 20, insbesondere 10 Gew.-% Fulleren umfassen, bezogen auf das Gesamtgewicht der Suspension.

Im Rahmen dieser Erfindung werden also elektrochemische Halbzellen, umfassend ein aktives Anoden- oder Kathodenmaterial mit mindestens einem Fulleren, beschrieben, wobei das aktive Anoden- oder Kathodenmaterial mit mindestens einem Fulleren in Form einer Suspension mit mindestens einer ionischen Flüssigkeit vorliegt.

In einer weiteren Ausführungsform liegt das Fulleren Form einer Suspension mit einem Elektrolyt vor, insbesondere mit einem Elektrolyt umfassend eine ionische Flüssigkeit. In einer bevorzugten Ausführungsform stellt der Elektrolyt das zur Bildung der Suspension eingesetzte Lösungsmittel dar.

In einer weiteren besonderen Ausführungsform umfasst die erfindungsgemäße elektrochemische Halbzelle ein Anoden- und/oder Kathodenmaterial mit einem aktiven Anoden- und/oder Kathodenmaterial. Das Anoden- und/oder Kathodenmaterial kann dabei neben dem aktiven Anoden- und/oder Kathodenmaterial ein Trägermaterial umfassen. Unter "Trägermaterial" ist ein Material zu verstehen, dass mit dem aktiven Anoden- und/oder Kathodenmaterial beschichtet ist, oder in dem das aktive Anoden- und/oder Kathodenmaterial verteilt ist, sich aber von dem aktiven Anoden- und/oder Kathodenmaterial unterscheidet. In einer Ausführungsform weist das Trägermaterial keine elektrochemische Aktivität, insbesondere keine elektrochemische Aktivität und keine elektrische Leitfähigkeit auf.

Der Elektrolyt umfasst ein ionenleitendes Medium, dessen elektrische Leitfähigkeit durch eine elektrolytische Dissoziation in Ionen begründet wird. In einer besonderen Ausführungsform der erfindungsgemäßen elektrochemischen Halbzelle umfasst der Elektrolyt eine ionische Flüssigkeit, insbesondere eine ionische Flüssigkeit ausgewählt aus der Gruppe bestehend aus 1-Butyl-3-methyl-imidazolium-chlorid, 1-Butyl-3-methyl-imidazolium-hexafluorphosphat, 1-Butyl-3-methyl-imidazolium-tetrafluorborat, 1-butyl-3-methyl-imidazolium-trifluormethansulfonat, 1-Butyl-1-methyl-pyrrolidinium-bis(trifluormethylsulfonyl)imid, Butyl-trimethylammonium-bis(trifluormethylsulfonyl)imid, Cholin-dihydrogenphosphat, Ethylammoniumnitrat, 1-Ethyl-3-methyl-imidazolium-bromid, 1-Ethyl-3-methyl-imidazolium-dicyanamid, 1-Ethyl-3-methyl-imidazolium-ethylsulfat, 1-Ethyl-3-methyl-imidazolium-methansulfonat, 1-Hexyl-3-methyl-imidazoliumchlorid, 1-Hexyl-3-methyl-imidazolium-hexafluorphosphat, 1-Hexyl-3-methyl-imidazolium-tetrafluorborat, 1-Methyl-3-octyl-imidazolium-hexafluorphosphat, 1-Methyl-3-octyl-imidazolium-tetrafluorborat, 1-Methyl-3-propyl-imidazolium-iodid, 1-Methyl-1-propyl-piperidinium-bis-(trifluormethylsulfonyl)-imid, Triethylsulphonium-bis(trifluormethylsulfonyl)imid oder Mischungen daraus, insbesondere 1-Methyl-1-propylpyrrolidiniumbis(trisfluoromethylsulfonyl)-imid.

Die Elektrode der erfindungsgemäßen elektrochemischen Halbzelle umfasst einen elektronenleitenden Werkstoff, der mit dem Elektrolyt in Kontakt steht. In einer erfindungsgemäßen Ausführungsform umfasst die Elektrode selbst nicht das aktiven Anoden- und/oder Kathodenmaterial. Die Elektrode der erfindungsgemäßen elektrochemischen Halbzelle wird weder reduziert noch oxidiert, sondern dient als Elektronenleiter. In anderen Worten können die Reduktions- und Oxidationsvorgänge des aktiven Anoden- und/oder Kathodenmaterial an der Elektrode stattfinden ohne dass das aktiven Anoden- und/oder Kathodenmaterial selbst Teil der Elektrode ist.

In einer besonderen Ausführungsform umfasst die Elektrode mindestens ein kohlenstoffhaltiges Material. In einer weiteren besonderen Ausführungsform umfasst das kohlenstoffhaltige Material Flächengebilde, insbesondere Kohlenstofffasern und/oder Kohlenstoffpartikel und/oder Kohlenstoffplatten und/oder Kohlenstoffnanoröhren. In einer weiteren besonderen Ausführungsform umfassen die Flächengebilde gewebte oder nicht-gewebte textile Flächengebilde, welche Kohlenstofffasern enthalten, insbesondere Kohlenstofffilz und/oder Kohlenstoffgewebe.

In einer vorteilhaften Ausgestaltung der Erfindung umfasst die elektrochemische Halbzelle mindestens ein aktives Anoden- und/oder Kathodenmaterial mit mindestens einem Fulleren, insbesondere [5,6]-Fulleren-$C_{60}$, mindes-

tens ein Elektrolyt mit mindestens einer ionischen Flüssigkeit, insbesondere 1-Methyl-1-propylpyrrolidiniumbis(trisfluoromethylsulfonyl)imid und mindestens eine Elektrode, insbesondere eine Graphitplatte und/oder einen Graphitstift und/oder einem Graphitfilz und/oder ein Graphitgewebe.

*Elektrochemische Halbzelle mit Suspension*

Erfindungsgemäß umfasst die elektrochemische Halbzelle eine Suspension mit mindestens einem Fulleren und mindestens einer ionischen Flüssigkeit. Die Suspension kann 0.1 bis 99.9 Gew.-%, bevorzugt 1 bis 50 Gew.-%, weiter bevorzugt 1 bis 25 Gew.-%, weiter bevorzugt 5 bis 20, insbesondere 10 Gew.-% Fulleren umfassen, bezogen auf das Gesamtgewicht der Suspension. Die Suspension kann 99.9 bis 0.1 Gew.-%, bevorzugt 99 bis 50 Gew.-%, weiter bevorzugt 99 bis 75 Gew.-%, weiter bevorzugt 95 bis 80, insbesondere 90 Gew.-% ionische Flüssigkeit umfassen, bezogen auf das Gesamtgewicht der Suspension. Im Rahmen dieser Erfindung werden allerding auch Ausführungsformen erfasst, welche eine Suspension aufweisen, die neben Fulleren und ionischer Flüssigkeit weitere Inhaltsstoffe beinhaltet.

In einer Ausführungsform umfasst das aktive Anoden- und/oder Kathodenmaterial eine elektrochemisch aktive Verbindung, welche mindestens 1 Elektron aufnehmen und/oder abgeben kann, bevorzugt mindestens 2 Elektronen, weiter bevorzugt mindestens 3 Elektronen, weiter bevorzugt mindestens 4 Elektronen, weiter bevorzugt mindestens 5 Elektronen, weiter bevorzugt mindestens 6 Elektronen.

In einer weiteren Ausführungsform umfasst das aktive Anoden- und/oder Kathodenmaterial eine elektrochemisch aktive Verbindung, welche 1 Elektron aufnehmen und/oder abgeben kann, bevorzugt bis zu 2 Elektronen, weiter bevorzugt bis zu 3 Elektronen, weiter bevorzugt bis zu 4 Elektronen, weiter bevorzugt bis zu 5 Elektronen, weiter bevorzugt bis zu 6 Elektronen.

Das Fulleren der erfindungsgemäßen elektrochemischen Halbzelle, umfassend mindestens ein Fulleren und mindestens eine ionischen Flüssigkeit, ist insbesondere Bestandteil des aktiven Anoden- und/oder Kathodenmaterials. Fulleren kann als mehrfach geladenes Kation beziehungsweise als mehrfach geladenes Anion auftreten, insbesondere kann das Fulleren in oxidierter Form in den Oxidationsstufen +1 bis +6 vorliegen und in reduzierter Form in den Oxidationsstufen -1 bis -6. In anderen Worten kann Fulleren in seinem elektronischen Grundzustand bis zu 6 Elektronen aufnehmen beziehungsweise bis zu 6 Elektronen abgeben. Das Fulleren kann in fester und/oder gelöster Form vorliegen, insbesondere in Form von Partikeln.

In einer besonderen Ausführungsform der erfindungsgemäßen elektrochemischen Halbzelle, umfassend mindestens ein Fulleren und mindestens eine ionische Flüssigkeit ist das Fulleren der einzige Bestandteil des aktiven Anoden- und/oder Kathodenmaterials.

In einer weiteren besonderen Ausführungsform der erfindungsgemäßen elektrochemischen Halbzelle, mit mindestens einem Fulleren und mindestens einer ionischen Flüssigkeit umfasst ein Anoden- und/oder Kathodenmaterial mit einem aktiven Anoden- und/oder Kathodenmaterial. Das Anoden- und/oder Kathodenmaterial kann dabei neben dem aktiven Anoden- und/oder Kathodenmaterial ein Trägermaterial umfassen. Unter "Trägermaterial" ist ein Material zu verstehen, dass mit dem aktiven Anoden- und/oder Kathodenmaterial beschichtet ist, oder in dem das aktive Anoden- und/oder Kathodenmaterial verteilt ist, sich aber von dem aktiven Anoden- und/oder Kathodenmaterial unterscheidet. In einer Ausführungsform weist das Trägermaterial keine elektrochemische Aktivität, insbesondere keine elektrochemische Aktivität und keine elektrische Leitfähigkeit auf.

Eine Ausführungsform der erfindungsgemäßen elektrochemischen Halbzelle, mit mindestens einem Fulleren und mindestens einer ionischen Flüssigkeit umfasst einen Elektrolyt. Der Elektrolyt umfasst ein ionenleitendes Medium, dessen elektrische Leitfähigkeit durch eine elektrolytische Dissoziation in Ionen begründet wird. In einer besonderen Ausführungsform der erfindungsgemäßen elektrochemischen Halbzelle umfasst der Elektrolyt eine ionische Flüssigkeit, insbesondere eine ionische Flüssigkeit ausgewählt aus der Gruppe bestehend aus 1-Butyl-3-methyl-imidazolium-chlorid, 1-Butyl-3-methyl-imidazolium-hexafluorphosphat, 1-Butyl-3-methyl-imidazolium-tetrafluorborat, 1-butyl-3-methyl-imidazolium-trifluormethansulfonat, 1-Butyl-1-methyl-pyrrolidinium-bis(trifluormethylsulfonyl)-imid, Butyl-trimethylammonium-bis(trifluormethylsulfonyl)imid, Cholindihydrogenphosphat, Ethylammoniumnitrat, 1-Ethyl-3-methyl-imidazolium-bromid, 1-Ethyl-3-methyl-imidazolium-dicyanamid, 1-Ethyl-3-methyl-imidazolium-ethylsulfat, 1-Ethyl-3-methyl-imidazolium-methansulfonat, 1-Hexyl-3-methyl-imidazoliumchlorid, 1-Hexyl-3-methyl-imidazolium-hexafluorphosphat, 1-Hexyl-3-methyl-imidazolium-tetrafluorborat, 1-Methyl-3-octyl-imidazolium-hexafluorphosphat, 1-Methyl-3-octyl-imidazolium-tetrafluorborat, 1-Methyl-3-propyl-imidazolium-iodid, 1-Methyl-1-propyl-piperidinium-bis-(trifluormethylsulfonyl)-imid, Triethylsulphonium-bis(trifluormethylsulfonyl)imid oder Mischungen daraus, insbesondere 1-Methyl-1-propylpyrrolidinium-bis-(trisfluoromethylsulfonyl)imid.

In einer weiteren Ausführungsform liegt das Fulleren Form einer Suspension mit einem Elektrolyt vor, insbesondere mit einem Elektrolyt umfassend eine ionische Flüssigkeit. In einer bevorzugten Ausführungsform stellt der Elektrolyt das zur Bildung der Suspension eingesetzte Lösungsmittel dar.

Eine Ausführungsform der erfindungsgemäßen elektrochemischen Halbzelle, mit mindestens einem Fulleren und mindestens einer ionischen Flüssigkeit umfasst eine Elektrode. Die Elektrode umfasst einen elektronenleitenden Werkstoff der mit dem Elektrolyt in Kontakt steht. In einer besonderen Ausführungsform umfasst die Elektrode selbst nicht das Fulleren. Die Elektrode der erfindungsgemäßen elektrochemischen Halbzelle, mit mindestens einem Fulleren und mindestens einer ionischen Flüssigkeit wird weder reduziert noch oxidiert, sondern dient als Elektronenleiter. In anderen Worten können die Reduktions- und Oxidationsvorgänge des Fullerens lediglich an der Elektrode stattfinden ohne dass das Fulleren selbst Teil der Elektrode ist.

In einer besonderen Ausführungsform umfasst die Elektrode mindestens ein kohlenstoffhaltiges Material. In einer weiteren besonderen Ausführungsform umfasst das kohlenstoffhaltige Material Flächengebilde, insbesondere Kohlenstofffasern und/oder Kohlenstoffpartikel und/oder Kohlenstoffplatten und/oder Kohlenstoffnanoröhren. In einer weiteren besonderen Ausführungsform umfassen die Flächengebilde gewebte oder nicht-gewebte textile Flächengebilde, welche Kohlenstofffasern enthalten, insbesondere Kohlenstofffilz und/oder Kohlenstoffgewebe.

Eine vorteilhafte Ausgestaltung der erfindungsgemäßen elektrochemischen Halbzelle, mit mindestens einem Fulleren und mindestens einer ionischen Flüssigkeit umfasst mindestens ein aktives Anoden- oder Kathodenmaterial mit mindestens einem Fulleren, insbesondere [5,6]-Fulleren-$C_{60}$, mindestens ein Elektrolyt mit mindestens einer ionischen Flüssigkeit, insbesondere 1-Methyl-1-propylpyrrolidiniumbis(trisfluoromethylsulfonyl)imid und mindestens eine Elektrode, insbesondere eine Graphitplatte und/oder Graphitstift und/oder Graphitfilz und/oder Graphitgewebe.

*Energiespeicher- und/oder Energiewandlervorrichtung*

Die Erfindung umfasst weiterhin eine elektrochemische Energiespeicher- und/oder Energiewandlervorrichtungen mit mindestens zwei der erfindungsgemäßen elektrochemischen Halbzellen.

In einer besonderen Ausführungsform umfasst die elektrochemische Energiespeicher- und/oder Energiewandlervorrichtung mindestens zwei elektrochemische Halbzellen, wobei

(i) eine erste elektrochemische Halbzellen

(a) ein aktives Anodenmaterial
(b) einen ersten Elektrolyt und
(c) eine erste Elektrode aufweist, und

(ii) eine zweite elektrochemische Halbzellen

(a) ein aktives Kathodenmaterial
(b) einen zweiten Elektrolyt und
(c) eine zweite Elektrode aufweist, und

(iii) der Elektrolyt der ersten elektrochemischen Halbzelle und der Elektrolyt der zweiten elektrochemischen Halbzelle über einen Separator, insbesondere einen mikroporösen Separator in Kontakt stehen und

(iv) die erste elektrochemische Halbzelle und/oder die zweiten elektrochemische Halbzelle unabhängig voneinander ein aktives Anoden- oder Kathodenmaterial aufweisen, das mindestens ein Fulleren als elektrochemisch aktive Verbindung umfasst, wobei das Fulleren in Form einer Suspension mit einer ionischen Flüssigkeit vorliegt und das aktive Anoden- oder Kathodenmaterial frei von Metallen, Metallionen und/oder Metallverbindungen ist.

Das aktive Anoden- und/oder Kathodenmaterial der ersten und/oder der zweiten elektrochemischen Halbzelle umfasst eine elektrochemisch aktive Verbindung, welche mindestens 1 Elektron aufnehmen und/oder abgeben kann, bevorzugt mindestens 2 Elektronen, weiter bevorzugt mindestens 3 Elektronen, weiter bevorzugt mindestens 4 Elektronen, weiter bevorzugt mindestens 5 Elektronen, weiter bevorzugt mindestens 6 Elektronen. Die Aufnahme oder Abgabe von Elektronen durch das aktive Anoden- oder Kathodenmaterial erfolgt durch Reduktions- oder Oxidationsvorgänge.

In einer Ausführungsform umfasst das aktive Anoden- und/oder Kathodenmaterial der ersten und/oder der zweiten elektrochemischen Halbzelle eine elektrochemisch aktive Verbindung, welche mindestens 1 Elektron aufnehmen und/oder abgeben kann, bevorzugt bis zu 2 Elektronen, weiter bevorzugt bis zu 3 Elektronen, weiter bevorzugt bis zu 4 Elektronen, weiter bevorzugt bis zu 5 Elektronen, weiter bevorzugt bis zu 6 Elektronen. Die Aufnahme oder Abgabe von Elektronen durch das aktive Anoden- oder Kathodenmaterial erfolgt durch Reduktions- oder Oxidationsvorgänge.

Erfindungsgemäß umfasst das aktive Anoden- oder Kathodenmaterial der ersten und/oder zweiten elektrochemischen Halbzelle der elektrochemischen Energiespeicher- und/oder Energiewandlervorrichtung mindestens ein Fulleren als elektrochemisch aktive Verbindung, wobei das Fulleren in Form einer Suspension mit einer ionischen Flüssigkeit vorliegt und das aktive Anoden- oder Kathodenmaterial frei von Metallen, Metallionen und/oder Metallverbindungen ist.

Fulleren kann als mehrfach geladenes Kation beziehungsweise als mehrfach geladenes Anion auftreten, insbesondere kann das Fulleren in oxidierter Form in den Oxidationsstufen +1 bis +6 vorliegen und in reduzierter Form in den Oxidationsstufen -1 bis -6. In anderen Worten kann Fulleren in seinem elektronischen Grundzustand bis zu 6 Elektronen aufnehmen beziehungsweise bis zu 6 Elektronen abgeben. Das Fulleren kann in fester und/oder gelöster Form vorliegen, insbesondere in Form von Partikeln.

In einer besonderen Ausführungsform ist das Fulleren der einzige Bestandteil des aktiven Anoden- und/oder Kathodenmaterials der ersten und/oder zweiten elektrochemischen Halbzelle der erfindungsgemäßen elektrochemischen Energiespeicher- und/oder Energiewandlervorrichtung. In einer weiteren besonderen Ausführungsform der erfindungsgemäßen Energiespeicher- und/oder Energiewandlervorrichtung, umfasst das aktive Anoden- und Kathodenmaterial der ersten und zweiten elektrochemischen Halbzelle mindestens ein Fulleren, wobei das aktive Anodenmaterial und das aktive Kathodenmaterial der ersten und der zweiten elektrochemischen Halbzelle identisch sind.

Die erfindungsgemäßen ersten und/oder zweiten elektrochemischen Halbzellen, umfassen ein aktives Anoden- oder Kathodenmaterial, das frei von Metallen, Metallionen und/oder Metallverbindungen ist.

In einer Ausführungsform der ersten und/oder der zweiten elektrochemischen Halbzelle, umfasst das aktive Anoden- oder Kathodenmaterial mindestens ein Fulleren, das in Form einer Suspension mit mindestens einer ionischen Flüssigkeit vorliegt. Die Suspension kann dabei 0.1 bis 99.9 Gew.-%, bevorzugt 1 bis 50 Gew.-%, weiter bevorzugt 1 bis 25 Gew.-%, weiter bevorzugt 5 bis 20, insbesondere 10 Gew.-% Fulleren umfassen, bezogen auf das Gesamtgewicht der Suspension. In einer Ausführungsform mit mindestens einem Fulleren und mindestens einer ionischen Flüssigkeit kann die Suspension 99.9 bis 0.1 Gew.-%, bevorzugt 99 bis 50 Gew.-%, weiter bevorzugt 99 bis 75 Gew.-%, weiter bevorzugt 95 bis 80, insbesondere 90 Gew.-% ionische Flüssigkeit umfassen, bezogen auf das Gesamtgewicht der Suspension.

In einer besonderen Ausführungsform der erfindungsgemäßen Energiespeicher- und/oder Energiewandlervorrichtung, umfasst die erste und die zweite elektrochemischen Halbzelle ein aktives Anoden- und/oder Kathodenmaterial mit mindestens einem Fulleren, das in Form einer Suspension vorliegt, wobei die Suspension des aktiven Anodenmaterials der ersten elektrochemischen Halbzelle mit der Suspension des aktiven Kathodenmaterials der zweiten elektrochemischen Halbzelle identisch ist.

In einer weiteren besonderen Ausführungsform der erfindungsgemäßen Energiespeicher- und/oder Energiewandlervorrichtung, umfasst die erste und die zweite elektrochemischen Halbzelle ein aktives Anoden- und/oder Kathodenmaterial mit mindestens einem Fulleren, das in Form einer Suspension mit mindestens einer ionischen Flüssigkeit vorliegt. In einer weiteren besonderen Ausführungsform der erfindungsgemäßen Energiespeicher- und/oder Energiewandlervorrichtung, umfasst die erste und die zweite elektrochemischen Halbzelle ein aktives Anoden- und/oder Kathodenmaterial mit mindestens einem Fulleren, das in Form einer Suspension mit mindestens einer ionischen Flüssigkeit vorliegt, wobei die Suspension des aktiven Anodenmaterials der ersten elektrochemischen Halbzelle mit der Suspension des aktiven Kathodenmaterials der zweiten elektrochemischen Halbzelle identisch ist.

Im Rahmen dieser Erfindung werden auch Ausführungsformen erfasst, welche eine Suspension umfasst, die neben Fulleren und ionischer Flüssigkeit weitere Inhaltsstoffe aufweist.

In einer weiteren besonderen Ausführungsform umfasst die ersten und/oder die zweiten erfindungsgemäße elektrochemische Halbzelle ein Anoden- und/oder Kathodenmaterial mit einem aktiven Anoden- und/oder Kathodenmaterial. Das Anoden- und/oder Kathodenmaterial kann dabei neben dem aktiven Anoden- und/oder Kathodenmaterial ein Trägermaterial umfassen. Unter "Trägermaterial" ist ein Material zu verstehen, dass mit dem aktiven Anoden- und/oder Kathodenmaterial beschichtet ist, oder in dem das aktive Anoden- und/oder Kathodenmaterial verteilt ist, sich aber von dem aktiven Anoden- und/oder Kathodenmaterial unterscheidet. In einer Ausführungsform weist das Trägermaterial keine elektrochemische Aktivität, insbesondere keine elektrochemische Aktivität und keine elektrische Leitfähigkeit auf.

In einer weiteren besonderen Ausführungsform liegt das Fulleren Form einer Suspension mit einem Elektrolyt vor, insbesondere mit einem Elektrolyt umfassend eine ionische Flüssigkeit. In anderen Worten umfasst diese Ausführungsform eine erste und/oder der zweiten elektrochemischen Halbzelle mit einem aktive Anoden- und/oder Kathodenmaterial das mindestens ein Fulleren aufweist, das in Form einer Suspension vorliegt, wobei die Suspension auch den Elektrolyt, insbesondere eine ionische Flüssigkeit, umfasst.

Der erste und/oder zweite Elektrolyt der ersten und/oder zweiten elektrochemischen Halbzelle der erfindungsgemäßen Energiespeicher- und/oder Energiewandlervorrichtung umfasst ein ionenleitendes Medium, dessen elektrische Leitfähigkeit durch eine elektrolytische Dissoziation in Ionen begründet wird. In einer besonderen Ausführungsform umfasst erste und/oder zweite Elektrolyt eine ionische Flüssigkeit, insbesondere eine ionische Flüssigkeit ausgewählt aus der Gruppe bestehend aus 1-Butyl-3-methyl-imidazolium-chlorid, 1-Butyl-3-methyl-imidazolium-hexafluorphosphat, 1-Butyl-3-methyl-imidazolium-tetrafluorborat, 1-Butyl-3-methyl-imidazolium-trifluormethansulfonat, 1-Butyl-1-methyl-pyrrolidinium-bis(trifluormethylsulfonyl)-imid, Butyl-trimethylammonium-bis(trifluormethylsulfonyl)imid, Cholindihydrogenphosphat, Ethylammoniumnitrat, 1-Ethyl-3-methyl-imidazolium-bromid, 1-Ethyl-3-methyl-imidazolium-dicyanamid, 1-Ethyl-3-methyl-imidazolium-ethylsulfat, 1-Ethyl-3-methyl-imidazolium-methansulfonat, 1-hexyl-3-methyl-imidazolium-

chlorid, 1-Hexyl-3-methyl-imidazolium-hexafluorphosphat, 1-hexyl-3-methyl-imidazolium-tetrafluorborat, 1-Methyl-3-octyl-imidazolium-hexafluorphosphat, 1-Methyl-3-octyl-imidazolium-tetrafluorborat, 1-Methyl-3-propyl-imidazolium-iodid, 1-Methyl-1-propyl-piperidinium-bis-(trifluormethylsulfonyl)-imid, Triethylsulphonium-bis(trifluormethylsulfonyl)imid oder Mischungen daraus, insbesondere 1-Methyl-1-propylpyrrolidinium-bis(trisfluoromethylsulfonyl)imid.

In einer Ausführungsform der erfindungsgemäßen ersten und/oder zweiten elektrochemischen Halbzelle, kann der erste und/oder zweite Elektrolyt identisch mit der ionischen Flüssigkeit des aktiven Anoden- und/oder Kathodenmaterials sein. In einer weiteren Ausführungsform der erfindungsgemäßen ersten und/oder zweiten elektrochemischen Halbzelle kann der erste Elektrolyt mit dem zweiten Elektrolyt identisch sein.

Die erste und/oder zweite Elektrode der ersten und/oder zweiten elektrochemischen Halbzelle der erfindungsgemäßen Energiespeicher- und/oder Energiewandlervorrichtung umfasst einen elektronenleitenden Werkstoff der mit dem Elektrolyt in Kontakt steht. In einer erfindungsgemäßen Ausführungsform umfasst die erste und/oder zweite Elektrode nicht das aktiven Anoden- und/oder Kathodenmaterial. Die erste und/oder zweite Elektrode der erfindungsgemäßen Energiespeicher- und/oder Energiewandlervorrichtung wird weder reduziert noch oxidiert, sondern dient als Elektronenleiter. In anderen Worten können die Reduktions- und Oxidationsvorgänge des aktiven Anoden- und/oder Kathodenmaterial an der ersten und/oder zweiten Elektrode stattfinden, ohne dass das aktiven Anoden- und/oder Kathodenmaterial selbst Teil der ersten und/oder zweiten Elektrode ist.

In einer besonderen Ausführungsform umfasst die erste und/oder zweite Elektrode mindestens ein kohlenstoffhaltiges Material, insbesondere zwei kohlenstoffhaltige Materialien. In einer weiteren besonderen Ausführungsform umfasst das kohlenstoffhaltige Material Flächengebilde, insbesondere Kohlenstofffasern und/oder Kohlenstoffpartikel und/oder Kohlenstoffplatten und/oder Kohlenstoffnanoröhren. In einer weiteren besonderen Ausführungsform umfassen die Flächengebilde gewebte oder nicht-gewebte textile Flächengebilde, welche Kohlenstofffasern enthalten, insbesondere Kohlenstofffilz und/oder Kohlenstoffgewebe.

In einer vorteilhaften Ausgestaltung der Erfindung umfasst die elektrochemische Energiespeicher- und/oder Energiewandlervorrichtung mit mindestens zwei elektrochemischen Halbzellen ein aktives Anoden- und/oder Kathodenmaterial mit mindestens einem Fulleren, insbesondere [5,6]-Fulleren-$C_{60}$, mindestens ein Elektrolyt mit mindestens einer ionischen Flüssigkeit, insbesondere 1-Methyl-1-propylpyrrolidiniumbis(trisfluoromethylsulfonyl)imid und mindestens eine erste und zweite Elektrode, insbesondere Graphitplatten und/oder Graphitstifte und/oder Graphitfilze und/oder Graphitgewebe.

Die Erfindung betrifft außerdem Verfahren zur Herstellung einer erfindungsgemäßen elektrochemischen Halbzelle, umfassend das Bereitstellen einer Suspension in einer ionischen Flüssigkeit mit mindestens einem Fulleren als elektrochemisch aktive Verbindung eines Anoden- oder Kathodenmaterials, wobei das aktive Anoden- oder Kathodenmaterial frei von Metallen, Metallionen und/oder Metallverbindungen ist.

In einer Ausführungsform des Verfahrens zur Herstellung einer erfindungsgemäßen elektrochemischen Halbzelle wird die Elektrode mit einer Suspension des aktiven Anoden und/oder Kathodenmaterials behandelt. Dabei wird zunächst eine Suspension des aktiven Anoden und/oder Kathodenmaterials vorbereitet, erfindungsgemäß eine Suspension aus mindestens einem Fulleren und mindestens einer ionischen Flüssigkeit, und anschließend die Elektrode mit der Suspension behandelt.

Die Erfindung betrifft außerdem die Verwendung einer erfindungsgemäßen elektrochemischen Halbzelle zur Herstellung der erfindungsgemäßen elektrochemische Energiespeicher- und/oder Energiewandlervorrichtung.

Die erfindungsgemäße elektrochemische Halbzelle, sowie die elektrochemische Energiespeicher- und/oder Energiewandlervorrichtungen mit mindestens zwei der erfindungsgemäßen elektrochemischen Halbzellen zeichnen sich durch eine besonders hohe theoretische Kapazität aus.

Die Kapazität ist das Produkt aus Strom und Zeit und ergibt sich gemäß der Formel (iii):

$$\text{Kapazität} = I \cdot t \text{ (iii)},$$

wobei I der Strom in Amper [A], t die Zeit in Stunden [h] ist.

Die Kapazität von elektrochemischen Halbzellen, sowie elektrochemischen Energiespeicher- und/oder Energiewandlervorrichtungen ergibt sich aus dem Faradayschen Gesetz gemäß Formel (iv):

$$Q = n \cdot z \cdot F \qquad \text{(iv)},$$

wobei Q die Ladungsmenge, n die umgesetzte Stoffmenge in Mol [mol], z die Anzahl der Elektronen und F die Faradaykonstante in Coulomb [C] (96487 C) ist.

Für eine erfindungsgemäße Halbzelle sowie die elektrochemische Energiespeicher- und/oder Energiewandlervorrichtung mit mindestens zwei der erfindungsgemäßen elektrochemischen Halbzellen, mit bis zu 6 Elektronenübergängen, ergibt sich damit eine Kapazität von 160.8 Ah/mol.

Für eine erfindungsgemäße Halbzelle sowie die elektrochemische Energiespeicher- und/oder Energiewandlervorrichtung mit mindestens zwei der erfindungsgemäßen elektrochemischen Halbzellen mit bis zu 3 Elektronenübergängen, ergibt sich damit eine Kapazität von 80.4 Ah/mol.

Für eine erfindungsgemäße Halbzelle sowie die elektrochemische Energiespeicher- und/oder Energiewandlervorrichtung mit mindestens zwei der erfindungsgemäßen elektrochemischen Halbzellen mit bis zu 2 Elektronenübergängen, ergibt sich damit eine Kapazität von 53.6 Ah/mol.

Für eine erfindungsgemäße Halbzelle sowie die elektrochemische Energiespeicher- und/oder Energiewandlervorrichtung mit mindestens zwei der erfindungsgemäßen elektrochemischen Halbzellen mit 1 Elektronenübergang, ergibt sich damit eine Kapazität von 26.8 Ah/mol.

Für eine erfindungsgemäße Halbzelle sowie die elektrochemische Energiespeicher- und/oder Energiewandlervorrichtung mit mindestens zwei der erfindungsgemäßen elektrochemischen Halbzellen zeigt demzufolge eine theoretische Kapazität in einem Bereich von 26.8 Ah/mol bis 160.8 Ah/mol.

Die Energiedichte ist das Produkt aus Ladungsmenge und Spannung und ergibt sich gemäß der Formel (v):

$$W = Q \cdot U \qquad (v),$$

wobei W die Ernergiedichte, Q die Ladungsmenge und U die Spannung ist.

Die Energiedichte bei drei Spannungsplateaus mit nutzbaren reversiblen Redoxreaktionen bei 3.5 V, 2.5 V und 1.5 V ergibt nach Formel (v) eine theoretische Energiedichte von 201 Wh/mol.

$$3.5 \text{ V} \cdot 26.8 \text{ Ah/mol} + 2.5 \text{ V} \cdot 26.8 \text{ Ah/mol} + 1.5 \text{ V} \cdot 26.8 \text{ Ah/mol} = 201 \text{ Wh/mol}$$

Figuren

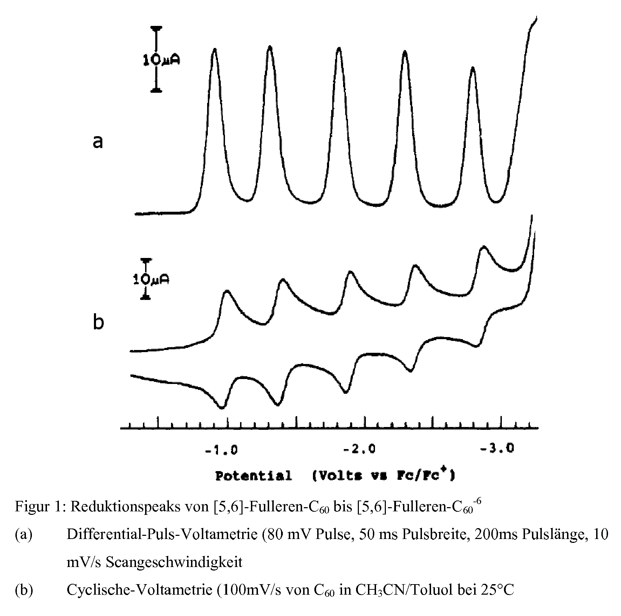

Figur 1 zeigt die Reduktionspeaks von [5,6]-Fulleren-$C_{60}$ bis [5,6]-Fulleren-$C_{60}^{-6}$ wie in Q, Xie, E, Perez-Cordero, L' Echegoyen, "Electrochemical Detection of C60-6 and C70-6 Enhanced Stability of Fullerides in Solution, J. Am. Soc, 1992, 114, 3978-3980 veröffentlicht.

Figur 2 zeigt die Lade- und Entladekurven einer Zelle mit 10 % [5,6]-Fulleren-$C_{60}$ in 1-Methyl-1-propylpyrrolidiniumbis(trifluoromethylsulfonyl)imid.

Figur 3 zeigt eine Einzelne Lade- und Entladekurve einer Zelle mit 10 % [5,6]-Fulleren-$C_{60}$ in 1-Methyl-1-propylpyrrolidiniumbis(trifluoromethylsulfonyl)imid

BEISPIELE

Beispiel 1:

Aus einer Suspension von 10 % [5,6]-Fulleren-$C_{60}$ in 1-Methyl-1-propyl-pyrrolidiniumbis(trifluoromethylsulfonyl)imid (99 %, Iolitec GmbH, Deutschland) wurde eine Energiespeicher- und/oder Energiewandlervorrichtung aufgebaut. Die Energiespeicher- und/oder Energiewandlervorrichtung wurde durch einen mikroporösen Separator (Celgard Inc., USA) in zwei elektrochemische Halbzelle geteilt. Als Elektroden wurden Graphitplatten (FU 4036, Schunk Kohlenstofftechnik GmbH, Deutschland) und Graphitfilz (GFA5, SGL-Carbon, Deutschland) eingesetzt. An einen PVC-Rahmen aus vier zueinander etwa parallelen Segmenten mit einem Hohlraum von 5 x 33 x 30 mm wurde eine Graphitplatte kraftschlüssig, insbesondere flüssigkeitsdicht, einseitig seitlich angebracht. Anschließend wurde ein Graphitfilz in den einseitig geöffneten Körper gelegt und eine Suspension von 10 % [5,6]-Fulleren-$C_{60}$ in 1-Methyl-1-propyl-pyrrolidiniumbis(trifluoromethylsulfonyl)imid auf den Graphitfilz aufgetragen, bis dieser vollständig mit der Suspension gesättigt war und keine weitere Suspension aufnehmen konnte. Der Hohlraum des einseitig geöffneten Körpers wurde anschießend 1-Methyl-1-propyl-pyrrolidiniumbis-(trifluoromethylsulfonyl)imid aufgefüllt, wobei das 1-Methyl-1-propyl-pyrrolidiniumbis(trifluoromethylsulfonyl)imid als Elektrolyt fungiert. Der einseitig geöffnete Körper stellt eine Ausführungsform der erfindungsgemäßen elektrochemischen Halbzelle der elektrochemischen Energiespeicher- und/oder Energiewandlervorrichtung dar. Anschließend wurde der einseitig geöffneten Körper durch das kraftschlüssige, insbesondere flüssigkeitsdichte Auftragen eines Seperators geschlossen. Daraufhin wurde an einem zweiten PVC-Rahmen aus vier zueinander etwa parallelen Segmenten mit einem Hohlraum von 5 x 33 x 30 mm eine zweite Graphitplatte kraftschlüssig, insbesondere flüssigkeitsdicht, einseitig seitlich angebracht. Anschließend wurde ein zweiter Graphitfilz in den zweiten einseitig geöffneten Körper gelegt und eine Suspension von 10 % [5,6]-Fulleren-$C_{60}$ in 1-Methyl-1-propyl-pyrrolidiniumbis-(trifluoromethylsulfonyl)imid auf den zweiten Graphitfilz aufgetragen, bis dieser vollständig mit der Suspension gesättigt war und keine weitere Suspension aufnehmen konnte. Der Hohlraum des zweiten einseitig geöffneten Körpers wurde anschießend 1-Methyl-1-propylpyrrolidiniumbis-(trifluoromethylsulfonyl)imid aufgefüllt, wobei das 1-Methyl-1-propylpyrrolidiniumbis(trifluoromethylsulfonyl)imid als Elektrolyt fungiert. Der zweite einseitig geöffnete Körper stellt eine Ausführungsform der elektrochemischen Halbzelle der erfindungsgemäßen elektrochemischen Energiespeicher- und/oder Energiewandlervorrichtung dar. Anschließend wurde der zweite einseitig geöffnete Körper über den die geöffnete Seite abgrenzenden PVC Rahmen an den Separator der ersten Halbzelle kraftschlüssig, insbesondere flüssigkeitsdicht einseitig, seitlich angebracht. Die elektrische Kontaktierung der ersten und der zweiten elektrochemischen Halbzelle erfolgte durch ein erstes Kupferblech an der ersten Graphitplatte und ein zweites Kupferblech und der zweiten Graphitplatte. Die beiden elektrochemischen Halbzellen wurden anschließend über das erste Kupferblech und das zweite Kupferblech mit einem elektrischen Leiter der Stromdichte 0.3 mA/cm$^2$ elektrisch leitend verbunden.

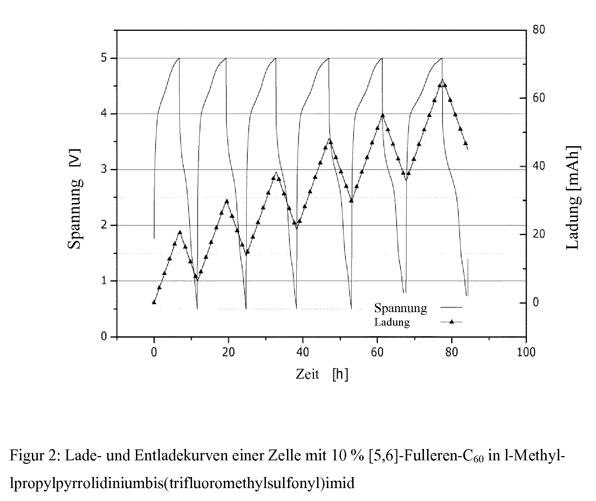

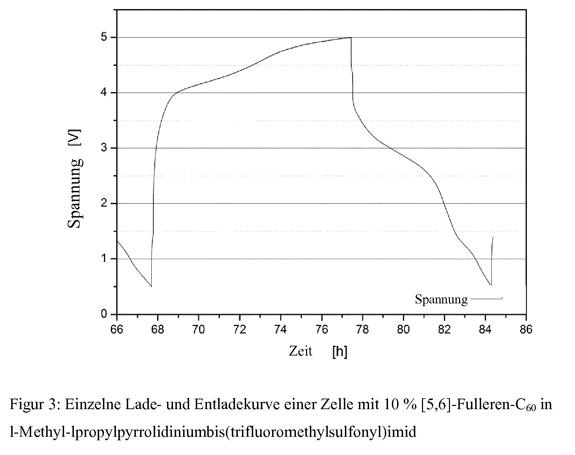

Wie in den Figuren 2 und 3 gezeigt betragen die Ladeschlußspannung der so hergestellten elektrochemischen Energiespeicher- und/oder Energiewandlervorrichtung etwa 5 V und die Entladeschlußspannung etwa 0,5 V. Bei einem Ladevorgang polarisiert die elektrochemischen Energiespeicher- und/oder Energiewandlervorrichtung zunächst gleichmäßig bis zu einer Spannung von etwa 4 V. Anschließend verlangsamt sich die Polarisation der elektrochemischen Energiespeicher- und/oder Energiewandlervorrichtung bis die Ladeschlußspannung erreicht ist. Nach dem Ladevorgang fällt die Klemmspannung innerhalb von 10 Minuten auf einen Wert von etwa 4,4 V und anschließend innerhalb von weiteren 10 Minuten auf einen Wert von etwa 4,3V. Anschließend wurde die elektrochemische Energiespeicher- und/oder Energiewandlervorrichtung entladen. Dabei polarisierte die Zelle innerhalb von weniger als 1 Minute auf einen Wert von etwa 3,9 V und anschließend innerhalb von 2.5 Stunden auf einen Wert von etwa 2,8 V und anschließend innerhalb von 3,5 Stunden auf einen Wert von etwa 1,25 V. Die Lade- und Entladekurven zeigen ein Verhalten, das dem der Nernstgleichung mit zwei Elektronenübergängen entspricht.

## Patentansprüche

1. Elektrochemische Halbzelle umfassend ein aktives Anoden- oder Kathodenmaterial mit mindestens einem Fulleren als elektrochemisch aktive Verbindung, wobei das Fulleren in Form einer Suspension mit einer ionischen Flüssigkeit vorliegt und das aktive Anoden- oder Kathodenmaterial frei von Metallen, Metallionen und/oder Metallverbindungen ist.

2. Elektrochemische Halbzelle gemäß Anspruch 1, wobei das Fulleren ausgewählt ist aus der Gruppe bestehend aus [5,6]-Fulleren-$C_{60}$, [5,6]-Fulleren-$C_{70}$, Fulleren-$C_{76}$, Fulleren-$C_{78}$, Fulleren-$C_{80}$, Fulleren-$C_{82}$, Fulleren-$C_{84}$, Fulleren-$C_{86}$, Fulleren-$C_{90}$ oder Mischungen daraus, vorzugsweise [5,6]-Fulleren-$C_{60}$ und/oder [5,6]-Fulleren-$C_{70}$, insbesondere [5,6]-Fulleren-$C_{60}$.

3. Elektrochemische Halbzelle gemäß Anspruch 1, wobei die ionische Flüssigkeit ausgewählt ist aus der Gruppe bestehend aus 1-Butyl-3-methyl-imidazolium-chlorid, 1-Butyl-3-methyl-imidazolium-hexafluorphosphat, 1-Butyl-3-methyl-imidazolium-tetrafluorborat, 1-Butyl-3-methyl-imidazolium-trifluormethansulfonat, 1-Butyl-1-methyl-pyrrolidinium-bis(trifluormethylsulfonyl)imid, Butyl-trimethylammonium-bis(trifluormethylsulfonyl)imid, Cholin-dihydrogenphosphat, Ethylammoniumnitrat, 1-Ethyl-3-methyl-imidazolium-bromid, 1-Ethyl-3-methyl-imidazolium-dicyanamid, 1-Ethyl-3-methyl-imidazolium-ethylsulfat, 1-Ethyl-3-methyl-imidazoliummethansulfonat, 1-Hexyl-3-methyl-imidazoliumchlorid, 1-Hexyl-3-methyl-imidazolium-hexafluorphosphat, 1-Hexyl-3-methyl-imidazolium-tetrafluorborat, 1-Methyl-3-octyl-imidazolium-hexafluorphosphat, 1-Methyl-3-octyl-imidazoliumtetrafluorborat, 1-Methyl-3-propyl-imidazolium-iodid, 1-Methyl-1-propylpiperidinium-bis-(trifluormethylsulfonyl)-imid, Triethylsulphonium-bis(trifluormethylsulfonyl)imid oder Mischungen daraus, vorzugsweise 1-Methyl-1-propylpyrrolidiniumbis(trisfluoromethylsulfonyl)imid.

4. Elektrochemische Halbzelle gemäß einem der vorhergehenden Ansprüche, umfassend eine Suspension mit 0.1 bis 99.9 Gew.-%, bevorzugt 1 bis 50 Gew.-%, weiter bevorzugt 1 bis 25 Gew.-%, weiter bevorzugt 5 bis 20, insbesondere 10 Gew.-% Fulleren, bezogen auf das Gesamtgewicht der Suspension.

5. Elektrochemische Halbzelle gemäß einem der vorhergehenden Ansprüche, mit einem aktiven Anoden oder Kathodenmaterial, das bis zu 6 Elektronen aufnehmen und/oder abgeben kann.

6. Elektrochemische Energiespeicher- und/oder Energiewandlervorrichtung umfassend zwei elektrochemische Halbzellen, wobei

   (i) eine erste elektrochemische Halbzelle

      (a) ein aktives Anodenmaterial
      (b) einen ersten Elektrolyt und
      (c) eine erste Elektrode aufweist, und

   (ii) eine zweite elektrochemische Halbzelle

      (a) ein aktives Kathodenmaterial
      (b) einen zweiten Elektrolyt und
      (c) eine zweite Elektrode aufweist, und

   (iii) der Elektrolyt der ersten elektrochemischen Halbzelle und der Elektrolyt der zweiten elektrochemischen Halbzelle über einen mikroporösen Separator in Kontakt stehen und
   (iv) die erste elektrochemische Halbzelle und/oder die zweite elektrochemische Halbzelle ein aktives Anoden- oder Kathodenmaterial aufweisen, das mindestens ein Fulleren als elektrochemisch aktive Verbindung umfasst, wobei das Fulleren in Form einer Suspension mit einer ionischen Flüssigkeit vorliegt und das aktive Anoden- oder Kathodenmaterial frei von Metallen, Metallionen und/oder Metallverbindungen ist.

7. Elektrochemische Energiespeicher- und/oder Energiewandlervorrichtung gemäß Anspruch 6, wobei die erste und zweite Elektrode mindestens ein kohlenstoffhaltiges Material umfasst, insbesondere zwei kohlenstoffhaltige Materialien.

8. Elektrochemische Energiespeicher- und/oder Energiewandlervorrichtung gemäß Anspruch 7, wobei die kohlenstoffhaltigen Materialien Flächengebilde umfassen, bevorzugt Kohlenstofffasern und/oder Kohlenstoffpartikel und/oder Kohlenstoffplatten und/oder Kohlenstoffnanoröhren.

9. Elektrochemische Energiespeicher- oder Energiewandlervorrichtung gemäß Anspruch 8, wobei die Flächengebilde gewebte oder nicht-gewebte textile Flächengebilde umfassen, welche Kohlenstofffasern enthalten, vorzugsweise Kohlenstofffilz und/oder Kohlenstoffgewebe.

10. Verfahren zur Herstellung einer elektrochemischen Halbzelle gemäß Anspruch 1, umfassend das Bereitstellen einer Suspension in einer ionischen Flüssigkeit mit mindestens einem Fulleren als elektrochemisch aktive Verbindung eines aktiven Anoden- oder Kathodenmaterials, wobei das aktive Anoden- oder Kathodenmaterial frei von Metallen, Metallionen und/oder Metallverbindungen ist.

11. Verwendung einer elektrochemischen Halbzelle gemäß einem der Ansprüche 1 bis 5 zur Herstellung einer elektrochemischen Energiespeicher- und/oder Energiewandlervorrichtung gemäß einem der Ansprüche 6 bis 9.

**Claims**

1. Electrochemical half cell comprising an active anode material or cathode material having at least one fullerene as electrochemically active compound, wherein the fullerene is present in the form of a suspension comprising an ionic liquid and the active anode material or cathode material is free of metals, metal ions and/or metal compounds.

2. Electrochemical half cell according to Claim 1, wherein the fullerene is selected from the group consisting of [5,6]-fullerene-$C_{60}$, [5,6]-fullerene-$C_{70}$, fullerene-$C_{76}$, fullerene-$C_{78}$, fullerene-$C_{80}$, fullerene-$C_{82}$, fullerene-$C_{84}$, fullerene-$C_{86}$, fullerene-$C_{90}$ and mixtures thereof, preferably [5,6]-fullerene-$C_{60}$ and/or [5,6]-fullerene-$C_{70}$, in particular [5,6]-fullerene-$C_{60}$.

3. Electrochemical half cell according to Claim 1, wherein the ionic liquid is selected from the group consisting of 1-butyl-3-methylimidazolium chloride, 1-butyl-3-methylimidazolium hexafluorophosphate, 1-butyl-3-methylimidazolium tetrafluoroborate, 1-butyl-3-methylimidazolium trifluoromethanesulphonate, 1-butyl-1-methyl-pyrrolidinium bis(trifluoromethylsulphonyl)imide, butyltrimethylammonium bis(trifluoromethylsulphonyl)imide, choline dihydrogenphosphate, ethylammonium nitrate, 1-ethyl-3-methylimidazolium bromide, 1-ethyl-3-methylimidazolium dicyanamide, 1-ethyl-3-methylimidazolium ethylsulphate, 1-ethyl-3-methylimidazolium methanesulphonate, 1-hexyl-3-methylimidazolium chloride, 1-hexyl-3-methylimidazolium hexafluorophosphate, 1-hexyl-3-methylimidazolium tetrafluoroborate, 1-methyl-3-octylimidazolium hexafluorophosphate, 1-methyl-3-octylimidazolium tetrafluoroborate, 1-methyl-3-propylimidazolium iodide, 1-methyl-1-propylpiperidinium bis(trifluoromethylsulphonyl)imide, triethylsulphonium bis(trifluoromethylsulphonyl)imide and mixtures thereof, preferably 1-methyl-1-propylpyrrolidinium bis(trifluoromethylsulphonyl)imide.

4. Electrochemical half cell according to any of the preceding claims comprising a suspension comprising from 0.1 to 99.9% by weight, preferably from 1 to 50% by weight, more preferably from 1 to 25% by weight, more preferably from 5 to 20% by weight, in particular 10% by weight, of fullerene, based on the total weight of the suspension.

5. Electrochemical half cell according to any of the preceding claims having an active anode material or cathode material which can take up and/or release up to 6 electrons.

6. Electrochemical energy storage and/or energy conversion device comprising two electrochemical half cells, wherein

    (i) a first electrochemical half cell has

        (a) an active anode material,
        (b) a first electrolyte and
        (c) a first electrode, and

    (ii) a second electrochemical half cell has

        (a) an active cathode material,
        (b) a second electrolyte and
        (c) a second electrode, and

    (iii) the electrolyte of the first electrochemical half cell and the electrolyte of the second electrochemical half cell are in contact via a microporous separator and
    (iv) the first electrochemical half cell and/or the second electrochemical half cell have an active anode material or cathode material which comprises at least one fullerene as electrochemically active compound,

and the fullerene is present in the form of a suspension comprising an ionic liquid and the active anode material or cathode material is free of metals, metal ions and/or metal compounds.

7. Electrochemical energy storage and/or energy conversion device according to Claim 6, wherein the first and second electrodes comprise at least one carbon-containing material, in particular two carbon-containing materials.

8. Electrochemical energy storage and/or energy conversion device according to Claim 7, wherein the carbon-containing materials comprise sheet-like structures, preferably carbon fibres and/or carbon particles and/or carbon plates and/or carbon nanotubes.

9. Electrochemical energy storage or energy conversion device according to Claim 8, wherein the sheet-like structures comprise woven or nonwoven textile sheet-like structures containing carbon fibres, preferably carbon felt and/or woven carbon fabric.

10. Process for producing an electrochemical half cell according to Claim 1, which comprises providing a suspension in an ionic liquid having at least one fullerene as electrochemically active compound of an active anode material or cathode material, wherein the active anode material or cathode material is free of metals, metal ions and/or metal compounds.

11. Use of an electrochemical half cell according to any of Claims 1 to 5 for producing an electrochemical energy storage and/or energy conversion device according to any of Claims 6 to 9.

## Revendications

1. Demi-cellule électrochimique comprenant un matériau anodique ou cathodique actif comprenant au moins un fullerène comme composé électrochimiquement actif, le fullerène se trouvant sous forme d'une suspension avec un liquide ionique et le matériau anodique ou cathodique actif étant exempt de métaux, d'ions métalliques et/ou de composés métalliques.

2. Demi-cellule électrochimique selon la revendication 1, le fullerène étant choisi dans le groupe constitué par le [5,6]-fullerèné-$C_{60}$, le [5,6]-fullerène-$C_{70}$, le fullerène-$C_{76}$, le fullerène-$C_{78}$, le fullerène-$C_{80}$, le fullerène-$C_{82}$, le fullerène-$C_{84}$, fullerène-$C_{86}$, le fullerène-$C_{90}$ ou leurs mélanges, de préférence le [5,6]-fullerène-$C_{60}$ et/ou le [5,6]-fullerène-$C_{70}$, en particulier le [5,6]-fullerène-$C_{60}$.

3. Demi-cellule électrochimique selon la revendication 1, le liquide ionique étant choisi dans le groupe constitué par le chlorure de 1-butyl-3-méthylimidazolium, l'hexafluorophosphate de 1-butyl-3-méthylimidazolium, le tétrafluoroborate de 1-butyl-3-méthylimidazolium, le trifluorométhanesulfonate de 1-butyl-3-méthylimidazolium, le bis(trifluorométhylsulfonyl)imide de 1-butyl-1-méthylpyrrolidinium, le bis(trifluorométhylsulfonyl)imide de butyltriméthylammonium, le dihydrogénophosphate de choline, le nitrate d'éthylammonium, le bromure de 1-éthyl-3-méthylimidazolium, le dicyanamide de 1-éthyl-3-méthylimidazolium, l'éthylsulfate de 1-éthyl-3-méthylimidazolium, le méthanesulfonate de 1-éthyl-3-méthylimidazolium, le chlorure de 1-hexyl-3-méthylimidazolium, l'hexafluorophosphate de 1-hexyl-3-méthylimidazolium, le tétrafluoroborate de 1-hexyl-3-méthylimidazolium, l'hexafluorophosphate de 1-méthyl-3-octylimidazolium, le tétrafluoroborate de 1-méthyl-3-octylimidazolium, l'iodure de 1-méthyl-3-propylimidazolium, le bis-(trifluorométhylsulfonyl)-imide de 1-méthyl-1-propylpipéridinium, le bis(trifluorométhylsulfonyl)imide de triéthylsulfonium ou leurs mélanges, de préférence le bis(trisfluorométhylsulfonyl)imide de 1-méthyl-1-propylpyrrolidinium.

4. Demi-cellule électrochimique selon l'une quelconque des revendications précédentes, comprenant une suspension présentant 0,1 à 99,9% en poids, de préférence 1 à 50% en poids, plus préférablement 1 à 25% en poids, encore plus préférablement 5 à 20, en particulier 10% en poids de fullerène, par rapport au poids total de la suspension.

5. Demi-cellule électrochimique selon l'une quelconque des revendications précédentes, présentant un matériau anodique ou cathodique actif qui peut accepter et/ou donner jusqu'à 6 électrons.

6. Dispositif électrochimique d'accumulation et/ou de conversion d'énergie, comprenant deux demi-cellules électrochimiques

    (i) une première demi-cellule électrochimique présentant

        (a) un matériau anodique actif
        (b) un premier électrolyte et
        (c) une première électrode et

    (ii) une deuxième demi-cellule électrochimique présentant

        (a) un matériau cathodique actif
        (b) un deuxième électrolyte et
        (c) une deuxième électrode et

    (iii) l'électrolyte de la première demi-cellule électrochimique et l'électrolyte de la deuxième demi-cellule électrochimique étant en contact via un séparateur microporeux et
    (iv) la première demi-cellule électrochimique et/ou la deuxième demi-cellule électrochimique comprenant un matériau anodique ou cathodique actif, qui comprend au moins un fullerène comme composé électrochimiquement actif, le fullerène se trouvant sous forme d'une suspension avec un liquide ionique et le matériau anodique ou cathodique actif étant exempt de métaux, d'ions métalliques et/ou de composés métalliques.

7. Dispositif électrochimique d'accumulation et/ou de conversion d'énergie selon la revendication 6, la première et la deuxième électrode comprenant au moins un matériau contenant du carbone, en particulier deux matériaux contenant du carbone.

8. Dispositif électrochimique d'accumulation et/ou de conversion d'énergie selon la revendication 7, les matériaux contenant du carbone comprenant des structures planes, de préférence des fibres de carbone et/ou des particules de carbone et/ou des plaquettes de carbone et/ou des nanotubes de carbone.

9. Dispositif électrochimique d'accumulation ou de conversion d'énergie selon la revendication 8, les structures planes comprenant des structures planes textiles tissées ou non tissées, qui contiennent des fibres de carbone, de préférence un feutre de carbone et/ou un tissu de carbone.

10. Procédé pour la fabrication d'une demi-cellule électrochimique selon la revendication 1, comprenant la mise à disposition d'une suspension dans un liquide ionique présentant au moins un fullerène comme composé électrochimiquement actif d'un matériau anodique ou cathodique actif, le matériau anodique ou cathodique actif étant exempt de métaux, d'ions métalliques et/ou de composés métalliques.

11. Utilisation d'une demi-cellule électrochimique selon l'une quelconque des revendications 1 à 5 pour la fabrication d'un dispositif électrochimique d'accumulation et/ou de conversion d'énergie selon l'une quelconque des revendications 6 à 9.

Figur 1: Reduktionspeaks von [5,6]-Fulleren-$C_{60}$ bis [5,6]-Fulleren-$C_{60}^{-6}$

(a)     Differential-Puls-Voltametrie (80 mV Pulse, 50 ms Pulsbreite, 200ms Pulslänge, 10
        mV/s Scangeschwindigkeit

(b)     Cyclische-Voltametrie (100mV/s von $C_{60}$ in $CH_3CN$/Toluol bei 25°C

Figur 2: Lade- und Entladekurven einer Zelle mit 10 % [5,6]-Fulleren-$C_{60}$ in l-Methyl-lpropylpyrrolidiniumbis(trifluoromethylsulfonyl)imid

Figur 3: Einzelne Lade- und Entladekurve einer Zelle mit 10 % [5,6]-Fulleren-$C_{60}$ in l-Methyl-lpropylpyrrolidiniumbis(trifluoromethylsulfonyl)imid

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **P. WASSERSCHEID ; W. KEIM.** *Angewandte Chemie,* 2000, vol. 39, 3772

- **Q, XIE ; E, PEREZ-CORDERO ; L' ECHEGOYEN.** Electrochemical Detection of C60-6 and C70-6 Enhanced Stability of Fullerides in Solution. *J. Am. Soc,* 1992, vol. 114, 3978-3980